# EUROPEAN PATENT APPLICATION

(11) **EP 3 525 217 A1**
(43) Date of publication of application: **14.08.2019**
(21) Application number: 19156676.9
(22) Date of filing: 12.02.2019
(51) Int. Cl.: H01F 1/08, B29C 64/106, H01F 1/053, H01F 1/055, H01F 1/057, H01F 1/113

(54) **PROCESS AND MATERIALS FOR PRINTED MAGNETS**

(30) Priority: 12.02.2018 US 201815894210
(71) Applicant: United Technologies Corporation, Farmington, CT 06032 (US)
(72) Inventor: DARDONA, Sameh, South Windsor, CT 06074 (US); BAILEY, Callum, West Hartford, CT 06119 (US)
(74) Representative: Dehns

(57) **Abstract**

A composite magnetic material includes magnetic particles with a first shape and a volume fraction. The composite material also includes a polymeric matrix surrounding the particles and has fractional remanence greater than 0.5. In an embodiment, a dispersion of magnetic particles in a continuous curable polymer matrix includes a particle volume fraction of greater than 60% and a fractional remanence of 0.5 or higher.

## Description

### BACKGROUND

The present invention relates generally to magnetic materials and more particularly to composite materials with a high remanence and high coercivity.

Magnetic materials are known and used in a variety of end applications. Example magnetic materials can include a monolithic structure formed of a magnetic material or a composite of magnetic material particles mixed with an organic binder. However, such magnetic materials are limited by the amount of magnetic material that can be incorporated in the composite structure.

### SUMMARY

According to one embodiment, a composite magnetic material includes magnetic particles with a shape and a volume fraction. The composite material also includes a polymeric matrix surrounding the particles and has a fractional remanence greater than 0.5.

In another embodiment, a dispersion of magnetic particles in a continuous curable polymer matrix includes a particle volume fraction of greater than 60% and a fractional remanence of 0.5 or higher.

### BRIEF DESCRIPTION OF THE DRAWINGS

FIG. 1 is a schematic representation of a magnetic hysteresis loop for a permanent magnet.
FIG. 2 is a method to form a three-dimensional (3D) magnetic composite structure.
FIG. 3 is a graph showing apparent viscosity as a function of shear rate for inks of different particle loadings.
FIG. 4 illustrates the steps of forming a 3D structure by direct write (DW) printing.
FIG. 5 is a scanning electron micrograph of a printed composite magnetic material of the present disclosure.
FIG. 6 is a plot showing fractional remanence of magnetic composite samples formed by different methods as a function of fractional intrinsic coercivity.
FIG. 7 are photographs of DW printed composite magnetic structures.

### DETAILED DESCRIPTION

The utility and effectiveness of contemporary composite magnetic structures comprising magnetic particles in a polymer matrix is a function of a number of features. Two of the most important are the magnetic loading properties of the component and the shape of the component.

The magnetic loading properties of a composite magnetic structure are determined by the volume fraction of the magnetic material in the structure typically in the form of dispersed magnetic particles. For spherical magnetic particles with a unimodal size distribution, the maximum volume fraction that can be achieved by a random packing of spheres of a similar radius is approximately 64% by volume. For a given material, this limits the magnetic properties to 64% of their 100% dense sintered counterparts.

A method of increasing the magnetic loading of composite material is to increase the volume fraction of the magnetic component of the composite. In the case of spherical particles, random sphere packing volume fraction increases by using particle size distributions that are bimodal, trimodal, or greater multimodal. A bimodal particle size distribution can achieve random volume packing densities as high as 85%, which represents a 33% packing increase in density and magnetization over a unimodal size distribution. The magnetic properties of the composite are further improved by minimizing the volume fraction of binder in the composite structure. This is achieved, as discussed later, by using less binder and strengthening the binder with an additional treatment during fabrication of the composite.

The second feature important for optimizing the utility of magnetic composite materials of the present disclosure is component shape. Additive manufacturing has allowed intricate shapes to be produced that can be designed to optimize the functionality of each component according to the performance expected from each application.

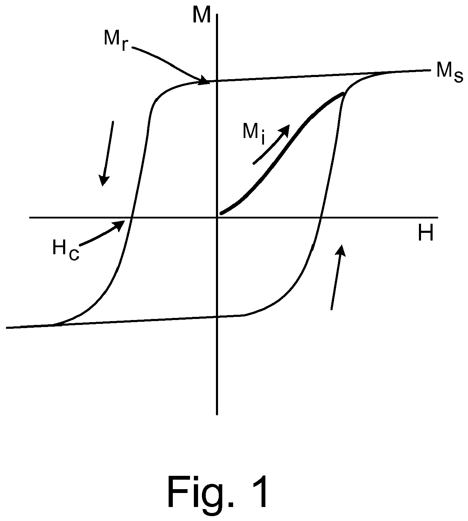

The composite magnetic materials of the present disclosure include hard or permanent magnetic materials. The properties of hard or permanent magnetic materials are summarized in FIG. 1. FIG. 1 is an illustration of a schematic hysteresis loop of a hard or permanent magnetic material showing induced magnetization M as a function of applied magnetic field H. Mᵢ shows the initial magnetization that occurs as the material is exposed to an applied magnetic field, and Mₛ is the saturation magnetization during the applied magnetic field. Mᵣ is the remanent magnetization or remanence after the applied field is removed. As the applied magnetic field is reversed, the induced magnetization reaches zero at the coercive field H_{c} or coercivity. High values of remanence and coercivity are desirable for permanent magnetic materials, so desirable magnetic materials of the present disclosre are, for example, NdFeB, rare earth cobalt alloys, strontium ferrite, and Alnico (Fe-Al-Ni-Co-Cu, Ti) alloys.

The shapes of the dispersed magnetic particles in the composite magnetic materials of the present disclosure may vary. For example, spheres, spheroids, disks, rods, fibers, prisms, and other shapes may be used which may have isotropic or anisotropic shape morphology. These particles are bound together using thermally-curable thermoset resin binders such as, for example, methacrylate, silicone and epoxy resins.

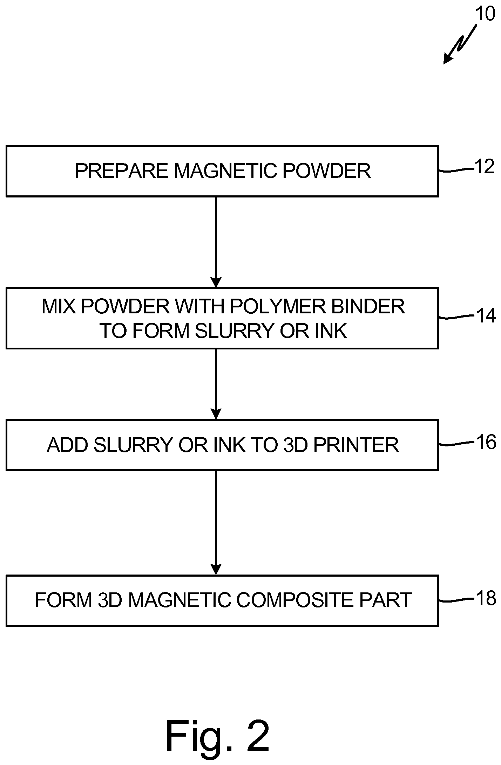

A method of forming a printed composite magnetic structure is shown in FIG. 2. Method 10 starts with preparing magnetic powder (step 12). Powder sizes may range from about 0.01 microns to about 500 microns. Powders with particle size distributions of bimodal or higher are preferred, and the powders may have isotropic or anisotropic shape morphology and isotropic or anisotropic magnetic properties. In magnetic composites, anisotropic powder shapes may have advantageous magnetic properties.

In the next step, the powder may be blended with a binder preferably a polymer precursor binder to form a dispersion, such as a slurry or an ink, that may be used to form 3D shapes by additive manufacturing (step 14). When formulating inks or slurries for DW printing, the viscosity and otherwise printability of the ink is a function of the shape and loading of the solid magnetic particles.

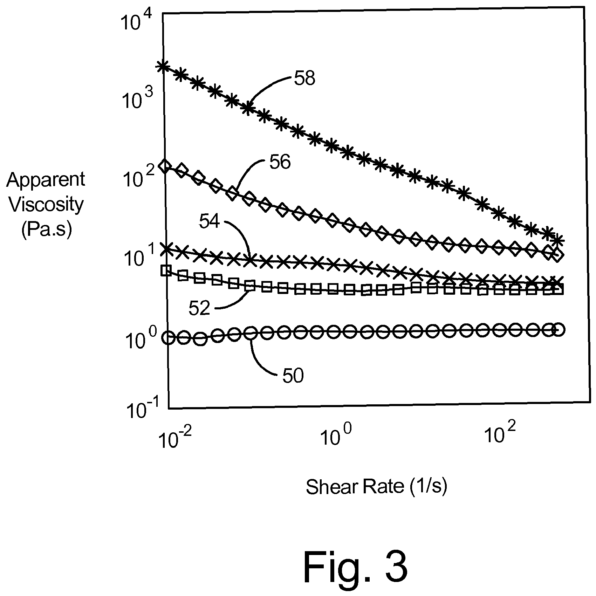

The viscosity as a function of shear rate for inks containing different particle loading of unimodally distributed 25 micron spherical magnetic particles is shown in FIG. 3. The particle loading in volume percent of the inks shown on the figure and the corresponding numbers of the curves is 50(0%), 52(31%), 54(37%), 56(46%), and 58(57%). Note the viscosity decreases as a function of shear rate for each particle loading. This is termed shear thinning. The shear thinning effect is most pronounced (steepest gradient) at high particle loadings which also have the highest zero shear viscosities. When these inks are printed, the deposited material stays where it is deposited. When shear is applied to the high zero shear velocity inks, the viscosity decrease is also high. This shear thinning nature is a key material requirement for direct write printing. With high viscosity ink, the printed ink is stationary and exhibits low viscosity (is printable) when the material is extruded.

In the next step, the ink may be added to a 3D printer in preparation for forming a composite magnetic part (step 16). A number of 3D forming processes may be employed, for example, fused deposition modeling (FDM), selective laser sintering (SLS), binder jetting, and direct write (DW) printing.. FDM incorporates filaments which are unwound from a coil and fed through an extrusion nozzle which melts the filaments and extrudes the material onto a base in a layer-by-layer build. Both nozzle and base are controlled by a computer that creates a 3D object according to a file stored in a computer. SLS is a layer-by-layer process that spreads powder on a base and sinters portions of the powder into a solid mass. The base indexes down one layer thickness and the process is repeated until an object is formed. The solid part that forms is a replica of a 3D model stored in memory in a computer. Binder jetting is a powder process that builds, in a layer-by-layer fashion on a base, cross sectional layers of a part according to a solid 3D model wherein portions of each layer are secured by a binder printed on the layer. As in other methods, the base indexes down one layer thickness and the process is repeated until an object is formed.

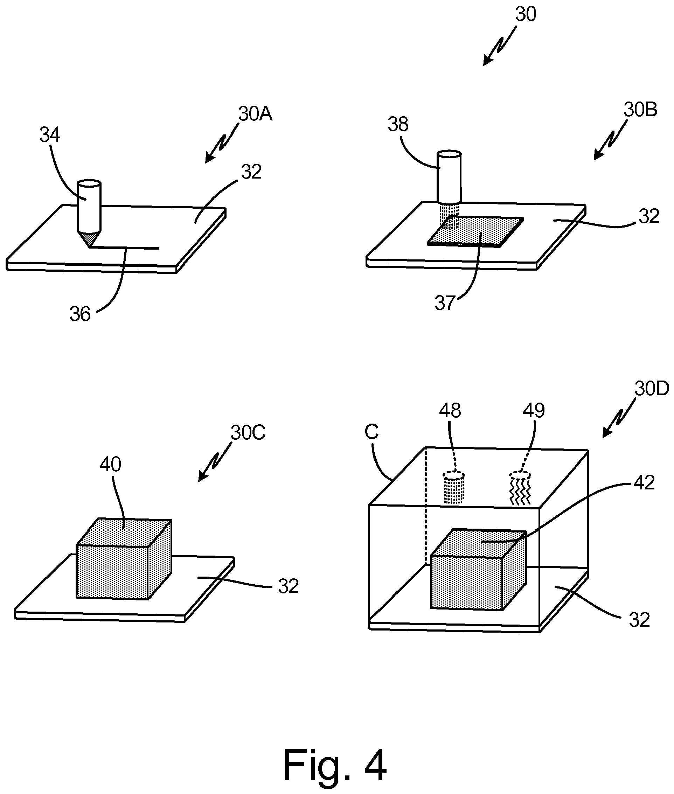

In the illustrated embodiment, DW printing is used (step 18). A schematic diagram illustrating four major steps in a DW printing process 30 is shown in FIG. 4. In step 30A, XYZ moveable DW printer 34 "prints" material 36 on an XYZ moveable printing stage 32. Printer 34 and base 32 are controlled by a control system (not shown) to form a 3D object. DW printer 34 may be any generic mechanical or air pressure extrusion technique that causes composite magnetic polymer paste 36 from printer 14 to flow through a nozzle onto printing stage 32 to form a single layer 37. In step 30B, the composite printed magnetic polymer material layer 37 is exposed to near UV source 38 that cures or crosslinks polymeric material of the composite magnetic material layer 37. The energy source used in the present disclosure has a wavelength of 405 nanometers. The UV threshold is 400 nanometer wavelength or less. The printing step 30A and curing step 30B are repeated until bulk composite "green" magnetic structure 40 is formed in step 30C. In the illustrated embodiment, steps 30A-30C are performed at ambient temperatures. After all layers are printed, green structure 40 is cured with further near UV exposure from near UV source 48 and heated to temperatures up to 60°C from thermal source 49 for up to 1 hour in chamber C to form final magnetic structure 42 in step 30D. In such an embodiment, the composite polymer/magnetic structure is not exposed to temperatures greater than 60 °C. This is in contrast to other additive manufacturing methods such as fused deposition modeling (FDM), where high temperatures are necessary to melt the thermoplastic resin, resulting in deleterious effects on the magnetic properties caused by oxidation of the magnetic particles.

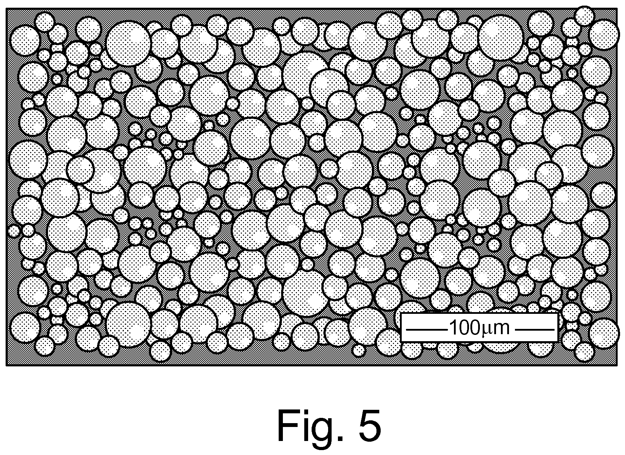

As noted earlier, the present disclosure describes forming a composite polymer/permanent magnetic material with optimum remanence and coercivity. This can be accomplished by using magnetic particles with high random packing density and a polymeric matrix with minimum volume fraction. In an example, a number of sample composite magnetic material structures were formed by a number of different methods and their magnetic properties measured. These samples were loaded with 60% volume fraction unimodally distributed 25-µm NdFeB spherical particles bonded in a methacrylate polymer matrix. A scanning electron micrograph of the printed composite magnetic material is shown in FIG. 5.

A number of different samples of composite structures were obtained using the material shown in FIG. 5. The samples were formed by injection molding (sample 60), fused deposition modeling (sample 62), selective laser sintering (sample 64), binder jet (sample 66), direct write printing (sample 68), and a direct write plus near UV process of the present disclosure (sample 70). The magnetic properties of each of samples 60-70 were measured and are shown in FIG. 5.

In FIG. 5, the fractional remanence is plotted against the fractional intrinsic coercivity for each of samples 60-70. The fractional remanence is defined as the remanence of the composite sample divided by the remanence of the starting raw magnetic powder. Injection molded sample 60 and fused deposition modeling sample 62 exhibit high fractional remanence but lower fractional intrinsic coercivity than all the others. The selective laser sintering sample 64 and binderjet sample 66 exhibited fractional intrinsic coercivity over 0.9 but had fractional remanence of less than 0.5. The direct write sample 68 exhibited a fractional remanence over 0.9 but a low fractional romance of about 0.25. This sample was formed from anisotropic powder which is believed to result in the low value of remanence. Direct write plus near UV cure sample 70 of the present disclosure has an intrinsic fractional remanence of about 0.5 as well as a fractional intrinsic coercivity of 1.0. Composite DW write plus near UV sample 60 is superior to all of the others.

It was mentioned previously that bimodal or higher particle size distribution packing can lead to improved magnetic properties of a composite material. As noted earlier, the packing density of a bimodal spherical magnetic particle distribution will result in a 33% increase in fractional remanence. This is illustrated by the predicted diamond data point 72 on the figure, which represents an even further improved material over direct write plus near UV cure sample 70 of the present disclosure. In summary, the composite magnetic material of the present disclosure (samples 60-70) exhibits properties superior to those in the prior art.

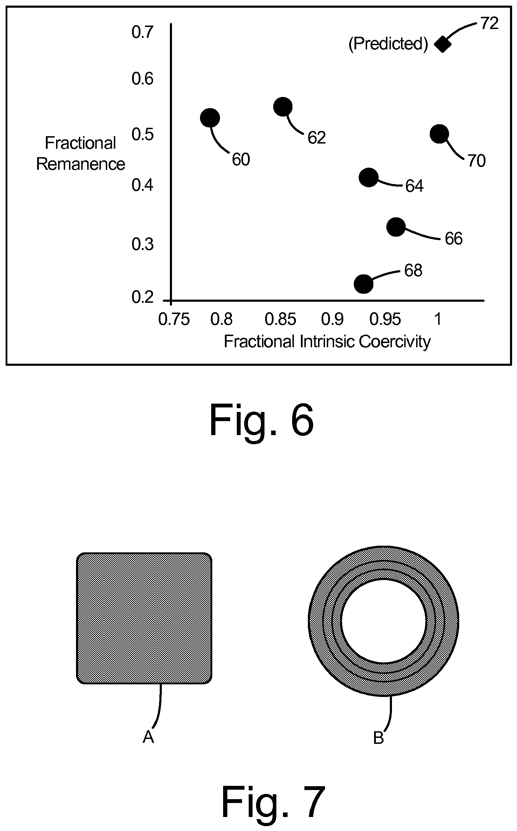

Small DW printed composite magnetic structures of 60% volume fraction unimodally distributed 25-µm NdFeB particles in a methacrylate polymer matrix formed by direct write plus UV cure are shown in FIG. 7. Although square tile A as well as Toroid B are shown in FIG. 7 as examples of representative shapes, other shapes with complicated and intricate geometries may be possible by the printing mechanisms of the present disclosure.

With the exception of direct write sample 68, the examples discussed here were composite materials comprising spherical magnetic particles in a polymer matrix. The invention is not limited to these examples. In addition to a spherical shape, the particles may be spheroids, rods, fibers, plates, disks, prismatic, or random. In addition, the particles in a magnetic composite material may be mixtures of the above.

The key benefits of the near UV assisted DW fabrication method of the present disclosure are that the method is a low temperature process with a potential for high resolution using 200 micron line width printing. Low temperature benefits include no loss of coercivity through oxidation which starts at temperatures of about 80°C and the ability to be integrated into low temperature integrated electronic package manufacturing processes. High resolution processing of magnetoelectronic devices eliminates the need for post-processing manufacturing procedures.

### Discussion of Possible Embodiments

The following are non-exclusive descriptions of possible embodiments of the present invention.

The composite magnetic material formed by additive manufacturing may include magnetic particles with a shape, volume fraction, particle size, and particle size distribution in a polymeric matrix surrounding the magnetic particles. The magnetic material may also exhibit a fractional remanence greater than 0.5.

The material of the preceding paragraph can optionally include, additionally and/or alternatively, any one or more of the following features, configurations and/or additional components:
The first volume fraction may be greater than 60%.

The fractional coercivity may be greater than 0.95.

The magnetic particles may be NdFeB, rare earth cobalt, strontium ferrite, Alnico (Fe-Al-Ni-Co-Cu-Ti) alloys and mixtures thereof.

The polymeric matrix may be a material selected from the group consisting of silicone, epoxy resins, and mixtures thereof.

The shape may be a sphere, spheroid, rod, fiber, plate, disc, prismatic, or mixtures thereof.

The shape may be a sphere.

The additive manufacturing may include injection molding, fused deposition modelling, selective laser sintering, binderjet, direct write, direct write with near UV cure or mixtures thereof.

The additive manufacturing may be direct write with near UV cure.

The particle size distribution may be multimodal.

The particle size may be from about 0.01 micron to about 500 microns.

A dispersion of magnetic particles in a continuous curable polymer matrix may include a particle volume fraction greater than 60% and a fractional remanence of 0.5 or higher.

The dispersion of the preceding paragraph can optionally include, additionally and/or alternatively, any one or more of the following features, configurations and/or additional components:
The fractional coercivity may be greater than 0.95.

The magnetic material may include NdFeB, rare earth cobalt, strontium ferrite, Alnico (Fe-Al-Ni-Co-Cu-Ti) alloys and mixtures thereof.

The shape of the magnetic particles may be a sphere, spheroid, rod, fiber, plate, disc, prismatic, or mixtures thereof.

The shape of the magnetic particles may be spherical.

The polymer matrix may be selected from the group consisting of silicone, epoxy resins, and mixtures thereof.

The magnetic particle size distribution may be multimodal.

The magnetic particle size distribution may be bimodal.

The magnetic particle size may be from about 0.01 micron to about 500 micron.

## Claims

1. A composite magnetic material formed by additive manufacturing comprising:
magnetic particles with a shape, volume fraction, particle size and particle size distribution;
a polymeric matrix surrounding the magnetic particles; and
fractional remanence greater than 0.5.

2. The material of claim 1, wherein the volume fraction is greater than 60%.

3. A dispersion of magnetic particles in a continuous curable polymer matrix comprising:
a particle volume fraction of greater than 60%; and
a fractional remanence of 0.5 or higher.

4. The material of claim 1 or 2, or the dispersion of claim 3, further comprising a fractional coercivity that is greater than 0.95.

5. The material or dispersion of any preceding claim, wherein the magnetic particles comprise NdFeB, rare earth cobalt, strontium ferrite, Alnico (Fe-Al-Ni-Co-Cu Ti) alloys, or mixtures thereof.

6. The material of claim 1, 2, 4 or 5, wherein the polymeric matrix comprises a material selected from the group consisting of methacrylate, silicone, epoxy resins, and mixtures thereof.

7. The dispersion of claim 3, 4 or 5, wherein the continually curable polymer matrix is selected from the group consisting of methacrylate, silicone, epoxy resins, and mixtures thereof.

8. The material or dispersion of any preceding claim wherein the shape of the magnetic particles comprises a sphere, spheroid, rod, fiber, plate, disk, prismatic, or mixtures thereof.

9. The material or dispersion of claim 8, wherein the shape of the magnetic particles comprises a sphere.

10. The material of claim 1, 2, 4, 5, 6, 8 or 9, wherein the additive manufacturing comprises injection molding, fused deposition modeling, selective laser sintering, binder jet, direct write, direct write with near UV cure or mixtures thereof.

11. The material of claim 10, wherein the additive manufacturing comprises direct write with near UV cure.

12. The material or dispersion of any preceding claim wherein the particle size distribution is multimodal.

13. The material or dispersion of claim 12, wherein the magnetic particle size distribution in the dispersion is bimodal.

14. The material or dispersion of any preceding claim wherein the particle size is from about 0.01 micron to about 500 microns.
